Europäisches Patentamt

European Patent Office

Office européen des brevets

(19)

(11) Veröffentlichungsnummer : **0 372 197 B1**

(12) ## EUROPÄISCHE PATENTSCHRIFT

(45) Veröffentlichungstag der Patentschrift :
01.04.92 Patentblatt 92/14

(51) Int. Cl.⁵ : **B60T 8/18,** B62D 61/12

(21) Anmeldenummer : **89118845.0**

(22) Anmeldetag : **11.10.89**

(54) **Einrichtung zur Gewinnung eines Achslastsignals.**

(30) Priorität : **21.06.89 DE 3920290**
**03.12.88 DE 3840838**

(43) Veröffentlichungstag der Anmeldung :
**13.06.90 Patentblatt 90/24**

(45) Bekanntmachung des Hinweises auf die
Patenterteilung :
**01.04.92 Patentblatt 92/14**

(84) Benannte Vertragsstaaten :
**AT DE FR GB IT SE**

(56) Entgegenhaltungen :
**EP-A- 0 275 845**
**CH-A- 529 642**
**DE-A- 3 216 407**
**DE-A- 3 324 401**
**DE-A- 3 330 618**

(56) Entgegenhaltungen :
**FR-A- 1 261 813**
**FR-A- 2 115 388**
**FR-A- 2 121 677**
**FR-A- 2 550 503**
**GB-A- 2 184 803**
**US-A- 2 934 351**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Eckert, Horst**
**Marienhöhe 2**
**W-3056 Rehburg-Loccum 3 (DE)**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zur Gewinnung eines Achslastsignals der mechanisch gefederten Antriebsachse eines aus der Antriebsachse und einer durch Druckbeaufschlagung eines Druckmittelelements mit wenigstens einem Abschaltdruck abschaltbaren Liftachse bestehenden Achsaggregats gemäß dem Oberbegriff der Patentansprüche 1 und 2.

In einem bekannten Achsaggregat der in dem Oberbegriff erwähnten Art wird die Liftachse durch Druckbeaufschlagung des als Druckmittelelement dienenden Liftbalgs mit wenigstens einem Abschaltdruck von der Fahrbahn abgehoben und dadurch abgeschaltet. In diesem Zustand wirkt das Achsaggregat als angetriebene Einzelachse. Durch Druckentlastung des Druckmittelelements - seitens des Fahrers oder selbsttätig - können die Liftachse auf die Fahrbahn abgesenkt und damit zugeschaltet und das Achsaggregat unter Erhöhung seiner Tragkraft zu einer Doppelachse werden.

Eine bekannte Einrichtung der eingangs genannten Art besteht aus einem vom Weg eines Punktes der Antriebsachse gesteuerten lastabhängigen Bremskraftregler, nachstehend ALB, der durch eine geeignete Ventil- und Arbeitszylinderanordnung beim Abschalten der Liftachse auf eine andere Kennlinie umgeschaltet wird. Diese Einrichtung liefert das in Rede stehende Achslastsignal als Druckdifferenz zwischen dem eingesteuerten Druck und dem ausgesteuerten Druck.

Die bekannte Einrichtung mit ALB, Ventil- und Arbeitszylinderanordnung ist aufwendig. Einen zusätzlichen erheblichen Aufwand bedingt die Verarbeitung des von ihr erzeugten Achslastsignals in Form der erwähnten Druckdifferenz für Einsatzfälle außerhalb des Bremssystems wie beispielsweise Traktionssteuerung, Anfahrhilfe, Antriebsachs-Überlastungsschutz usw.

Der Erfindung liegt deshalb die Aufgabe zugrunde, eine Einrichtung der eingangs genannten Art zu vereinfachen und mit einfachen Mitteln vielseitig einsetzbar zu machen.

Diese Aufgabe wird durch die in den Patentansprüchen 1 und 2 angegebene Erfindung gelöst. Vorteilhafte Ausgestaltungen und Weiterbildungen sind in den Unteransprüchen angegeben.

Die Erfindung läßt sich in Verbindung mit allen geeigneten Druckmitteln ausführen.

Die Erfindung wird nachstehend unter Angabe weiterer Vorteile anhand von in Zeichnungen dargestellten Ausführungsbeispielen erläutert. Dabei werden für funktionsgleiche Bauelemente durchgehend gleiche Bezugszeichen verwendet.

Es zeigen

Figur 1 eine generelle Anordnung eines Achsaggregats mit Liftachse und einer Einrichtung zur Gewinnung eines Achslastsignals von dessen Antriebsachse,

Figur 2 Einzelheiten der Einrichtung zur Gewinnung des Achslastsignals,

Figur 3 eine andere Ausgestaltung der Einrichtung nach Figur 2.

Figur 4 eine andere Einrichtung zur Gewinnung des Achslastsignals,

Figur 5 eine Draufsicht auf die Einrichtung nach Figur 4.

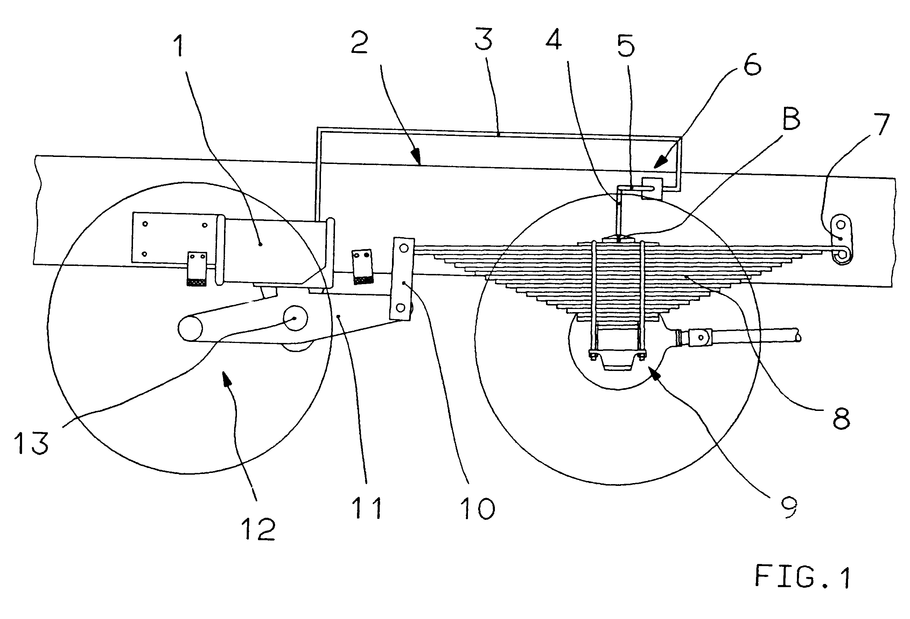

Figur 1 zeigt ausschnittsweise einen generell mit (2) bezeichneten Fahrzeugoberbau, der, soweit sich aus dem Nachstehenden nichts anderes ergibt, in nicht näher beschriebener Weise aus einem Fahrzeugrahmen sowie Aufbau- und Anbauteilen besteht. Über wenigstens ein mechanisches Federelement, Aufhänge- und Verbindungsmittel (7, 10, 13), wenigstens einen Doppelhebel (11) und wenigstens ein Druckmittelelement (1) ist an dem Fahrzeugoberbau (2) ein Achsaggregat aufgehängt. Das mechanische Federelement ist als Blattfeder (8) ausgebildet und wird als solche nachstehend in Bezug genommen. Entsprechendes gilt für das als Liftbalg (1) ausgebildete Druckmittelelement. Ein Liftbalg ist üblich, wenn das verwendete Druckmittel gasförmig, insbesondere Luft, ist. Es ist aber ebenso üblich, als Druckmittelelement Kolbenzylinder einzusetzen, dies insbesondere bei Verwendung eines hydraulischen Druckmittels. Auch hinsichtlich des mechanischen Federelements sind andere Bauarten üblich.

Das Achsaggregat besteht aus einer durch die Blattfeder (8) mechanisch gefederten Antriebsachse (9) und einer Liftachse (12). Die Liftachse (12) ist als Nachlaufliftachse dargestellt, kann aber in bekannter Weise auch vorauslaufend angeordnet sein.

Die Liftachse (12) ist durch Druckbeaufschlagung des Liftbalges (1) mit einem Druck wenigstens von der Höhe eines Abschaltdrucks von der Fahrbahn abhebbar und damit abschaltbar. Die Höhe des Abschaltdrucks hängt von der Belastung des Achsaggregates, nachstehend Achslast, den Hebelverhältnissen des Doppelhebels (11), der Länge der Blattfeder (8) und der Auslegung des Liftbalgs (1) ab. Bei Beaufschlagung des Liftbalgs (1) mit geringerem Druck als dem Abschaltdruck ist die Liftachse (12) auf die Fahrbahn abgesenkt und damit zugeschaltet. Sie übernimmt in diesem Zustand je nach Höhe des Drucks im Liftbalg (1) einen Anteil der wirkenden Achslast. Ist der Liftbalg (1) völlig (über)druckentlastet, so bestimmt sich der von der Liftachse (12) übernommene Achslastanteil nur nach den durch den Doppelhebel (11) und die Länge der Blattfeder (8) vorgegebenen Hebelverhältnissen im Achsaggregat. In diesem Zustand ist die Liftachse (12) voll zugeschaltet.

2

Figur 1 zeigt noch die generelle Anordnung einer Einrichtung (6) zur Gewinnung eines Achslastsignals der Antriebsachse (9). Auf diese wird über ein Gestänge (4) und einen Hebel (5) der Weg etwa senkrecht zur Fahrbahn eines Punktes (B) der Antriebsachse (9) übertragen. Der Einfachheit und Übersichtlichkeit halber ist der Punkt (B) an einem Bereich der Blattfeder (8) dargestellt, der fest mit der Antriebsachse (9) verbunden ist. Der Punkt (B) kann aber auch an anderen geeigneten Bereichen der Antriebsachse (9) vorgesehen werden.

Außerdem wird über eine Druckmittelleitung (3) der Einrichtung (6) der in dem Liftbalg (1) herrschende Druck zugeführt.

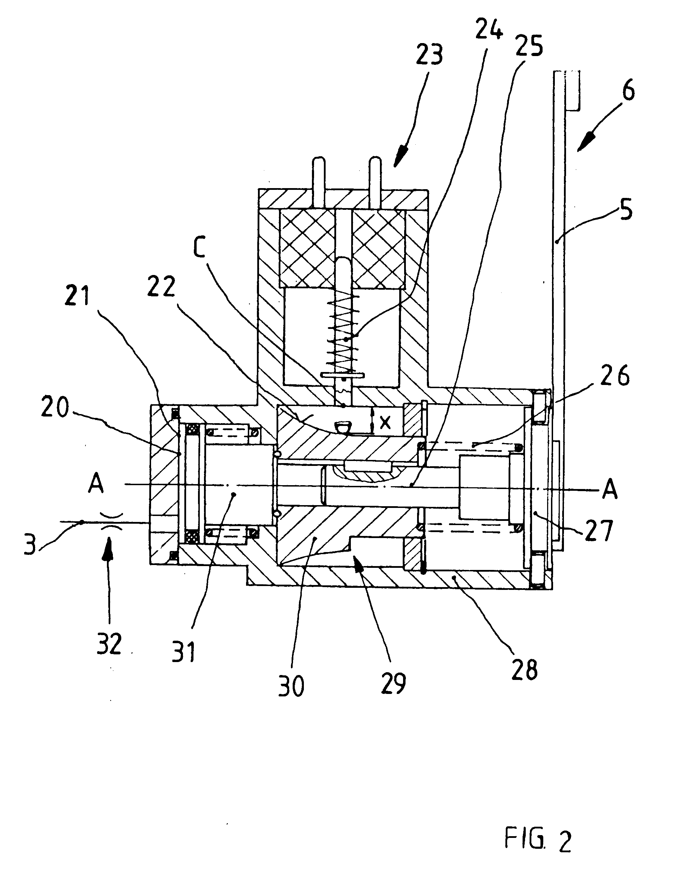

Figur 2 zeigt Einzelheiten der Einrichtung (6).

In einem Gehäuse (28) ist ein generell mit (29) bezeichneter Signalkörper um eine Drehachse (AA) drehbar und im wesentlichen längs der Drehachse (AA) axial verschiebbar gelagert. Das Gehäuse (28) ist am Fahrzeugrahmen befestigt, so daß es selbst Teil des Fahrzeugoberbaus (2) und die Drehachse (AA) an demselben fest ist. In dem Gehäuse (28) und damit am Fahrzeugoberbau (2) ist ein Punkt (C) definiert, der innerhalb der durch die weiter unten beschriebenen Funktionen gesetzten Grenzen beliebig angeordnet sein kann.

Der Signalkörper (29) weist eine Mantelfläche auf, die für jede Konstellation von Drehstellung und Axialstellung des Signalkörpers (29) im wesentlichen quer zu der Drehachse (AA) einen vorbestimmten Abstand von dem Punkt (C) einnimmt. In der Darstellung ist von der Mantelfläche deren Schnittlinie (22) mit der Zeichnungsebene erkennbar. Die Strecke (x) gibt für die dargestellte Konstellation aus Drehstellung und Axialstellung den Abstand der Schnittlinie (22) und damit der Mantelfläche, die im folgenden mit dem Bezugszeichen der Schnittlinie (22) bezeichnet wird, von dem Punkt (C) an.

Der Signalkörper (29) ist innerhalb eines Betriebsbereiches abhängig von dem genannten Weg des Punktes (B) der Antriebsachse (9) um die Drehachse (AA) drehbar und abhängig vom Druck in dem Liftbalg (1) im wesentlichen längs der Drehachse (AA) axial verschiebbar. Der Betriebsbereich wird durch Eigenschaften des Fahrzeugs und die Einbauverhältnisse der Einrichtung (6) sowie des Gestänges (4) und des Hebels (5) bestimmt.

Zum Zwecke der Verdrehung des Signalkörpers (29) ist der Hebel (5) am Gehäuse (28) ebenfalls um die Achse (AA) drehbar gelagert und in nicht näher beschriebener Weise mittels einer Zwischenwelle (25) wenigstens drehfest mit dem Signalkörper (29) verbunden. An seinem freien Ende ist der Hebel (5) mit dem Gestänge (4) verbunden. Zum Zweck der axialen Verschiebung des Signalkörpers (29) ist in dem Gehäuse (28) eine über die Druckleitung (3) mit dem Liftbalg (1) verbundene Druckkammer (20) vorgesehen. Der Signalkörper (29) ist an seiner in der Zeichnung linken Stirnseite als Kolbenfläche (21) ausgebildet, mit der er die Druckkammer (20) begrenzt.

Aus konstruktiven und fertigungstechnischen Gründen besteht der Signalkörper (29) aus einem die Mantelfläche (22), tragenden Formstück (30) und einem damit wenigstens in Wirkrichtung des Drucks in der Druckkammer (20) verbundenen, die Kolbenfläche (21) tragenden Kolben (31). Auch jede andere geeignete Ausbildung des Signalkörpers (29) ist möglich.

Entgegen der Wirkrichtung des Drucks in der Druckkammer (20) und damit des Drucks in dem Liftbalg (1) ist der Signalkörper (29) von einer Rückstellfeder (26) beaufschlagt. Anstelle der Rückstellfeder (26) kann auch jedes andere geeignete Rückstellmittel verwendet werden, beispielsweise ein nicht aus dem Liftbalg (1) stammender Druck, insbesondere der Vorratsdruck; in diesem Falle müßte der Signalkörper (29) in geeigneter Weise eine zweite Kolbenfläche aufweisen.

Im bisher beschriebenen Umfang funktioniert die Einrichtung (6) wie folgt.

Jeder Weg der genannten Art des Punktes (B) der Antriebsachse (9) wird über das Gestänge (4) und den Hebel (5) auf den Signalkörper (29) übertragen und verdreht diesen entsprechend. Jeder Druck in dem Liftbalg (1) wird durch die Druckmittelleitung (3) in die Druckkammer (20) übertragen und verschiebt über die Kolbenfläche (21) nach Überwindung der Kraft der Rückstellfeder (26) den Signalkörper (29) entsprechend axial. Die Mantelfläche (22) des Signalkörpers (29) ist nun so ausgebildet, daß der jeder Konstellation von Drehstellung und Axialstellung desselben zugeordnete Abstand (x) ein Maß für den gerade von der Antriebsachse (9) übernommenen Achslastanteil ist. Der jeweilige Abstand (x) bildet also ein Achslastsignal der mechanisch gefederten Antriebsachse (9).

Die Mantelfläche (22) stellt dabei wenigstens innerhalb des weiter oben definierten Betriebsbereiches einen dreidimensionalen Nocken dar.

Über den bisher beschriebenen Grundumfang hinaus zeigt das Ausführungsbeispiel einige vorteilhafte Ausgestaltungen. Zunächst ist zu erwähnen, daß die Rückstellfeder (26) einstellbar ist. Dies ermöglicht eine Grundeinstellung der Einrichtung (6), insbesondere im Hinblick auf Streuungen der Charakteristik der Rückstellfeder (26). Zur Einstellung der Rückstellfeder (26) ist ein deren gehäuseseitiger Abstützung dienender Gehäusedeckel (27) als Einschraubteil ausgebildet, mit dem die Einbaulänge der Rückstellfeder (26) und damit deren Vorspannung veränderbar sind.

Mit (32) ist eine Drossel in der Druckmittelleitung (3) angeordnet, die verhindert, daß jede fahrbahnbedingte

3

Druckspitze im Liftbalg (1) in die Druckkammer (20) und damit auf die Axialstellung des Signalkörpers (29) durchschlägt. Die Drossel (32) steht damit für eine Drossel in der Verbindung zwischen Druckkammer (20) und Druckmittelelement (1) allgemein und kann auch an anderer geeigneter Stelle vorgesehen sein.

Das von der Einrichtung (6) erzeugte Achslastsignal kann auf jede geeignete Art ausgewertet werden. Im Ausführungsbeispiel ist zu diesem Zweck ein mit dem Gehäuse (28) verbundener, in bekannter Weise aufgebauter elektrischer Wegsensor (23) dargestellt. Der Wegsensor (23) erfaßt mit seinem im Bereich des Punktes (C) unterbrochen dargestellten Fühler (24) den jeweiligen Abstand (x) und damit das Achslastsignal und setzt diesen in ein elektrisches Signal um. Dadurch wird das von der Einrichtung (6) erzeugte Achslastsignal der Verarbeitung in elektrischen/elektronischen Steuerungs- oder Regelungssystemen des Fahrzeugs leicht zugänglich. Beispielsweise ist insoweit an jeweils elektronische lastabhängige Bremskraftregelung, Traktionssteuerung, Anfahrhilfe, Antriebsachs-Überlastungsschutz usw. zu denken.

Dabei bedeuten "Antriebsachs-Überlastungsschutz", daß mittels einer geeigneten Steuereinrichtung die Liftachse (12) automatisch zugeschaltet wird, wenn die Antriebsachse bis zum zulässigen Wert ausgelastet ist.

Bei der "Traktionssteuerung" wird über eine geeignete Steuereinrichtung der Druck im Liftbalg (1) derart gesteuert, daß die einmal erreichte zulässige Belastung der Antriebsachse (9) eingeregelt wird. Dadurch wird sichergestellt, daß von der Antriebsachse stets die größtmögliche Vortriebskraft auf die Fahrbahn übertragen werden kann. Bei der "Anfahrhilfe" wird durch eine geeignete Steuereinrichtung der Druck im Liftbalg kurzzeitig so gesteuert, daß die Antriebsachse (9) ebenso kurzzeitig überlastet wird. Dadurch wird die von der Antriebsachse (9) auf die Fahrbahn übertragbare Vortriebskraft kurzzeitig erhöht, was insbesondere beim Anfahren, zumal auf einer Fahrbahn mit geringem Reibwert, von Vorteil ist.

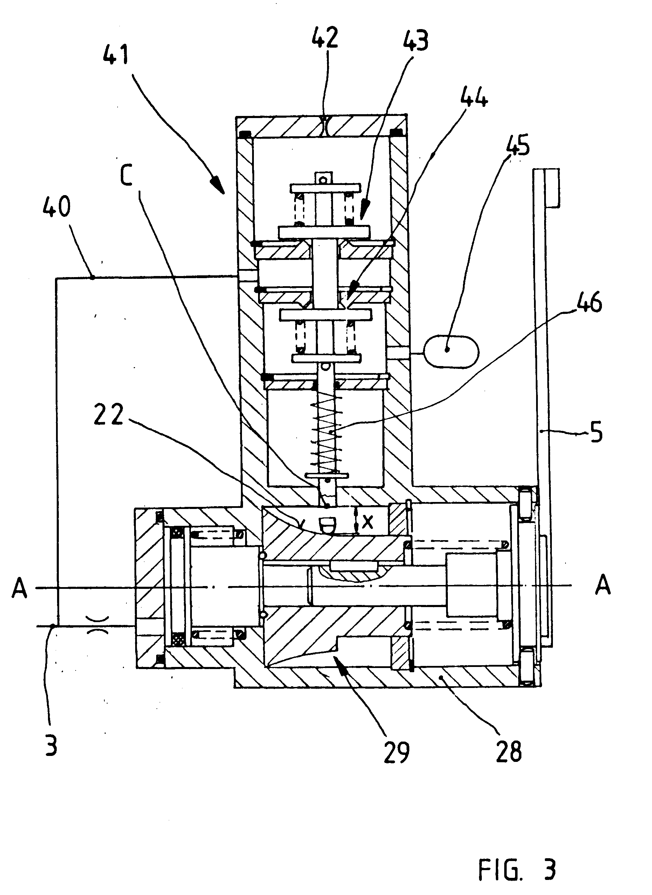

Das Ausführungsbeispiel nach Figur 3 entspricht mit Ausnahme der Art der Auswertung des Achslastsignals dem vorigen Ausführungsbeispiel.

In diesem Ausführungsbeispiel wird der jeweilige Abstand (x) und damit das Achslastsignal von einem im Bereich des Punktes (C) wieder unterbrochen dargestellten Stößel (46) erfaßt, dessen entsprechende Bewegung direkt zur Steuerung des Einlaßventils (44) und des Auslaßventils (43) eines insgesamt mit (41) bezeichneten Niveauregelventils dient. Der Liftbalg (1) ist über die Druckmittelleitung (3) und eine weitere Druckmittelleitung (40) an das Niveauregelventil (41) angeschlossen. Je nach Bewegung des Stößels (46) wird in an sich bekannter Weise der Liftbalg (1) über das Einlaßventil (44) mit einem Druckmittelvorrat (45) oder über das Auslaßventil (43) mit einem Druckentlastungsanschluß (42) verbunden. In an sich bekannter Weise wird dadurch der Abstand zwischen den Punkten (B) an der Antriebsachse und (C) am Ventilgehäuse (28) und dadurch am Fahrzeugoberbau (2) und damit die Achslast der Antriebsachse (9) eingeregelt. Auf diese Weise ist eine einfache Einrichtung zur Traktionssteuerung geschaffen.

In nicht näher dargestellter Weise kann das Niveauregelventil (41) durch einen lastabhängigen Bremskrafttregler ersetzt werden, in welchem Fall der Stößel (46) dessen Regelventil steuern und damit der lastabhängigen Bremskraftregelung dienen würde.

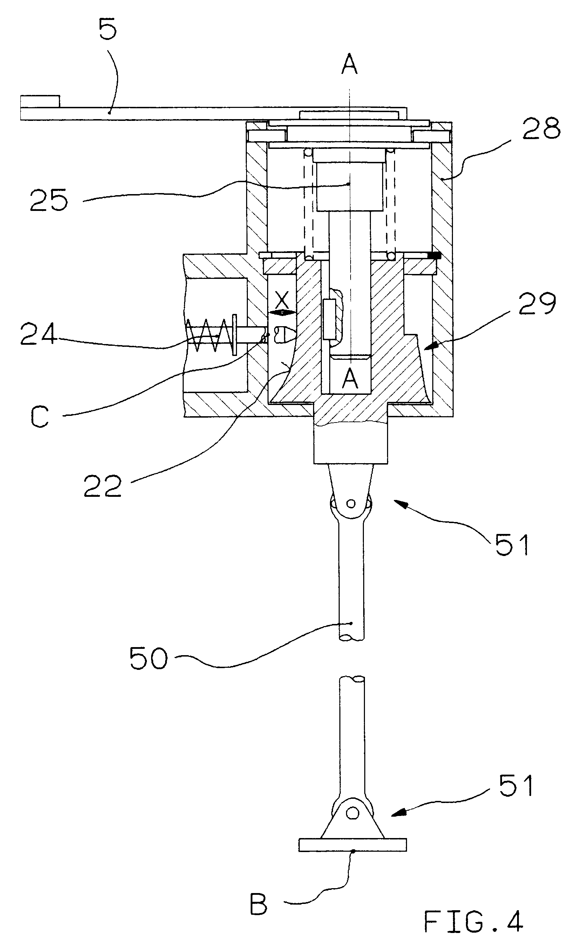

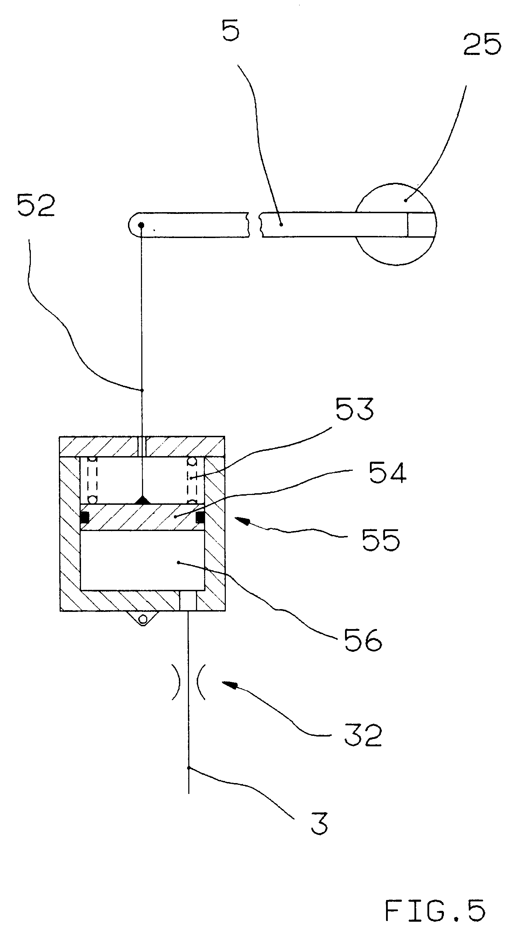

Figur 4 zeigt im Längsschnitt, Figur 5 zeigt ausschnittsweise in Draufsicht auf Figur 4 eine andere Einrichtung zur Gewinnung des Achslastsignals der Antriebsachse.

Der Signalkörper (29) ist in diesem Falle abhängig vom Druck in dem Liftbalg (1) drehbar und abhängig vom Weg des Punktes (B) im wesentlichen längs der Drehachse (AA) axial verschiebbar.

Die Drehachse (AA) ist in diesem Fall etwa koaxial zur Bewegungsachse des Punktes (B) angeordnet. Zwecks Verschiebung ist der Signalkörper (29) über eine im wesentlichen koaxial zu der genannten Bewegungsrichtung angeordnete Stange (50) mit dem Punkt (B) verbunden.

Aus der Draufsicht nach Figur 5 geht hervor, daß an dem äußeren Ende des Hebels (5) über eine Kolbenstange (52) der Kolben (54) eines an die Druckmittelleitung (3) angeschlossenen Zylinders (55) angreift. Der Kolben (54) wird in dem Zylinder (55) abhängig von dem Druck im Liftbalg (1) verschoben. Dadurch wird über den Hebel (5) und die Zwischenwelle (25) der Signalkörper (29) um einen von der Höhe des Drucks im Liftbalg (1) abhängigen Wert verdreht.

Die Druckabhängigkeit der Verschiebung des Kolbens (54) und damit die Verdrehung des Signalkörpers (29) wird durch eine entsprechend ausgelegte Feder (53) in der Zylindereinheit (55) bewirkt, welche den Kolben (54) gegen den einer Kammer (56) in dem Zylinder (55) zugeführten Druck des Liftbalgs (1) vorspannt und deren Federcharakteristik in Verbindung mit der Größe der Wirkfläche des Kolbens (54) die Zuordnung von Druck des Liftbalgs (1) und Verschiebung des Kolbens (54) bzw. Verdrehung des Signalkörpers (29) bestimmt.

Zur Vermeidung etwa aus der Bewegung des Punktes (B) resultierender Querkräfte in der Stange (50) und im Signalkörper (29) ist die Stange (50) über generell mit (51) bezeichnete Gelenke an den Signalkörper (29) und an die Antriebsachse (9) angelenkt.

In nicht dargestellter Weise kann die Stange (50) durch ein anderes geeignetes Gestänge, beispielsweise ein Winkelgestänge, ersetzt werden. Auch der Zylinder (55) kann in nicht dargestellter Weise durch eine anders

4

aufgebaute Baueinheit mit gleichen Funktionen ersetzt werden.

Im übrigen gelten für die Einrichtung nach den Figuren 4 und 5 die zu den früheren Figuren gegebenen Erläuterungen in entsprechender Anwendung mit.

Es liegt auf der Hand, daß auch mehrere Einrichtungen zur Auswertung des Achslastsignals, insbesondere der vorstehend erwähnten Arten gleichzeitig, beispielsweise am Gehäuse (28) winkelversetzt, vorgesehen sein können.

Der Fachmann erkennt auch, daß die in den Ausführungsbeispielen in bzw. an dem Gehäuse (28) angeordneten erfindungswesentlichen Elemente auch ohne gemeinsames Gehäuse angeordnet werden können, sofern sie nur den erfindungswesentlichen Bedingungen, beispielsweise Elemente des Fahrzeugoberbaus bzw. der Antriebsachse bzw. des Achsaggregats zu sein, genügen.

Der Fachmann erkennt ferner, daß die Ausführungsbeispiele auch derart abgewandelt werden können, daß der Druck in dem Liftbalg (1) über einen geeigneten Zylinder an dem Hebel (5) angreift, während der Weg des Punktes (B) den Signalkörper (29) im wesentlichen längs der Drehachse (AA) axial verschiebt. In diesem Fall werden die Ursachen von Drehung und Axialverschiebung des Signalkörpers (29) gegenüber den Ausführungsbeispielen vertauscht. Eine derartige Einrichtung ist in den Figuren 4 und 5 beschrieben.

Schließlich erkennt der Fachmann, daß sich der Schutzbereich der Erfindung nicht in den Ausführungsbeispielen erschöpft, sondern alle Ausgestaltungen umfaßt, deren Merkmale sich den Patentansprüchen unterordnen.

## Patentansprüche

1. Einrichtung zur Gewinnung eines Achslastsignals der mechanisch gefederten Antriebsachse (9) eines aus der Antriebsachse (9) und einer durch Druckbeaufschlagung wenigstens eines Druckmittelelements (Liftbalg 1) mit wenigstens einem Abschaltdruck abschaltbaren Liftachse (12) bestehenden Achsaggregats, gekennzeichnet durch einen Signalkörper (29), der abhängig vom Weg eines Punktes (B) der Antriebsachse (9) um eine am Fahrzeugoberbau (2) feste Drehachse (AA) drehbar und abhängig vom Druck in dem Druckmittelelement (Liftbalg 1) im wesentlichen längs der Drehachse (AA) axial verschiebbar ist und dessen Mantelfläche (22) im wesentlichen quer zu der Drehachse (AA) für jede Konstellation von Drehstellung und Axialstellung des Signalkörpers (29) einen vorbestimmten Abstand (x) von einem Punkt (C) des Fahrzeugoberbaus (2) aufweist.

2. Einrichtung zur Gewinnung eines Achslastsignals der mechanisch gefederten Antriebsachse (9) eines aus der Antriebsachse (9) und einer durch Druckbeaufschlagung wenigstens eines Druckmittelelements (Liftbalg 1) mit wenigstens einem Abschaltdruck abschaltbaren Liftachse (12) bestehenden Achsaggregats, gekennzeichnet durch einen Signalkörper (29), der abhängig vom Druck in dem Druckmittelelement (Liftbalg 1) um eine am Fahrzeugoberbau (2) feste Drehachse (AA) drehbar und abhängig vom Weg eines Punktes (B) der Antriebsachse (9) im wesentlichen längs der Drehachse (AA) axial verschiebbar ist und dessen Mantelfläche (22) im wesentlichen quer zu der Drehachse (AA) für jede Konstellation von Drehstellung und Axialstellung des Signalkörpers (29) einen vorbestimmten Abstand (x) von einem Punkt (C) des Fahrzeugoberbaus (2) aufweist.

3. Einrichtung nach Anspruch 1, dadurch gekennzeichnet, daß der Signalkörper (29) an einer Stirnseite eine Kolbenfläche (21) aufweist, mit der er eine mit dem Druckmittelelement (Liftbalg 1) verbundene Druckkammer (20) begrenzt.

4. Einrichtung nach Anspruch 3, dadurch gekennzeichnet, daß der Signalkörper (29) aus einem die Mantelfläche (22) tragenden Formstück (30) und einem damit wenigstens in Wirkrichtung des Drucks in der Druckkammer (20) verbundenen, die Kolbenfläche (21) tragenden Kolben (31) besteht.

5. Einrichtung nach einem der vorhergehenden Ansprüche, dadurch gekennzeichnet, daß der Signalkörper (29) entgegen der Wirkrichtung des Drucks in dem Druckmittelelement (Liftbalg 1) von einer Rückstellfeder (26) beaufschlagt ist.

6. Einrichtung nach einem der Ansprüche 1 oder 3 bis 4, dadurch gekennzeichnet, daß der Signalkörper (29) entgegen der Wirkrichtung des Drucks in dem Druckmittelelement (Liftbalg 1) mit nicht aus dem Druckmittelelement (Liftbalg 1) stammenden Druck beaufschlagt ist.

7. Einrichtung nach Anspruch 5, dadurch gekennzeichnet, daß die Vorspannung der Rückstellfeder (26) einstellbar ist.

8. Einrichtung nach Anspruch 7, dadurch gekennzeichnet, daß zur Einstellung der Vorspannung der Rückstellfeder (26) ein der gehäuseseitigen Abstützung der Rückstellfeder (26) dienender Gehäusedeckel (27) mit veränderlicher Einschraubtiefe in das Gehäuse (28) einschraubbar ist.

9. Einrichtung nach einem der Ansprüche 3 bis 8, dadurch gekennzeichnet, daß in der Verbindung (Druckmittelleitung 3) zwischen der Druckkammer (20) und dem Druckmittelelement (Liftbalg 1) eine Drossel (32) angeordnet ist.

10. Einrichtung nach einem der vorhergehenden Ansprüche, dadurch gekennzeichnet, daß am Fahrzeugoberbau (2) ein den Abstand (x) der Mantelfläche (22) des Signalkörpers (29) von dem Punkt (C) am Fahrzeugoberbau (2) erfassender elektrischer Wegsensor (23) angeordnet ist.

11. Einrichtung nach einem der vorhergehenden Ansprüche, dadurch gekennzeichnet, daß am Fahrzeugoberbau (2) ein den Abstand (x) der Mantelfläche (22) des Signalkörpers (29) von dem Punkt (C) am Fahrzeugoberbau (2) erfassender Stößel (46) axial verschiebbar geführt ist.

12. Einrichtung nach Anspruch 11, dadurch gekennzeichnet, daß der Stößel das Regelventil eines lastabhängigen Bremskraftreglers steuert.

13. Einrichtung nach Anspruch 11, dadurch gekennzeichnet, daß der Stößel (46) das Einlaßventil (44) und das Auslaßventil (43) eines Niveauregelventils (41) steuert.


## Claims

1. Arrangement for obtaining an axle load signal of the mechanically sprung drive axle (9) of an axle assembly consisting of the drive axle (9) and a lift axle (12) which can be de-activated by means of the supplying of pressure to at least one pressure medium element (pneumatic spring 1) having at least one de-activating pressure, characterised by a signal member (29) which, depending on the travel of a point (B) of the drive axle (9) is rotatable about a rotation axis (AA) stationary on the body of the vehicle and, depending on the pressure in the pressure medium element (pneumatic spring 1) is axially displaceable substantially along the rotation axis (AA), and the outer surface (22) of which, substantially transversely to the rotation axis (AA), for each combination of rotational position and axial position of the signal member (29), is at a predetermined distance (x) from a point (C) on the vehicle body (2).

2. Arrangement for obtaining an axle load signal of the mechanically sprung drive axle (9) of an axle assembly consisting of the drive axle (9) and a lift axle (12) which can be de-activated by means of the supplying of pressure to at least one pressure medium element (pneumatic spring 1) having at least one de-activating pressure, characterised by a signal member (29) which, depending on the pressure in the pressure medium element (pneumatic spring 1) is rotatable about a rotation axis (AA) stationary on the vehicle body (2) and, depending on the travel of a point (B) of the drive axle (9), is axially displaceable substantially along the rotation axis (AA), and the outer surface (22) of which, substantially transversely to the rotation axis (AA), for each combination of rotational position and axial position of the signal member (29), is at a predetermined distance (x) from a point (C) on the vehicle body (2).

3. Arrangement according to Claim 1, characrised in that the signal member (29) has on an end face a piston surface (21) with which it defines a pressure chamber (20) connected with the pressure medium element (pneumatic spring 1).

4. Arrangement according to Claim 3, characterised in that the signal member (29) consists of a shaped member (30) carrying the outer surface (22) and a piston (31) which is connected thereto at least in the direction in which the pressure in the pressure chamber (20) acts, and which carries the piston surface (21).

5. Arrangement according to one of the preceding Claims, characterised in that the signal member (29) is acted on by a return spring (26) in the direction counter to that in which the pressure in the pressure medium element (pneumatic spring 1) acts.

6. Arrangement according to one of Claims 1 or 3 to 4, characterised in that the signal member (29) is acted on by a pressure which does not originate from the pressure medium element (pneumatic spring 1), in the direction counter to that in which the pressure in the pressure medium element (pneumatic spring 1) acts.

7. Arrangement according to Claim 5, characterised in that the bias of the return spring (26) is adjustable.

8. Arrangement according to Claim 7, characterised in that for the adjustment of the bias of the return spring (26), a housing cover (27) which serves as a bearing surface for the return spring (26) on the housing side is arranged to be screwed with a variable screwing denth into the housing (28).

9. Arrangement according to one of Claims 3 to 8, characterised in that a throttle (32) is arranged in the connection (pressure medium line 3) between the pressure chamber (20) and the pressure medium element (pneumatic spring 1).

10. Arrangement according to one of the preceding Claims, characterised in that an electrical travel sensor (23) detecting the distance (x) between the outer surface (22) of the signal member (29) and the point (C) on the vehicle body (2) is arranged on the vehicle body (2).

11. Arrangement according to one of the preceding Claims, characterised in that a plunger (46) detecting the distance (x) between the outer surface (22) of the signal member (29) and the point (C) on the vehicle body (2) is guided so as to be axially displaceable on the vehicle body (2).

12. Arrangement according to Claim 11, <u>characterised in that</u> the plunger controls the regulating valve of a load-dependent braking force regulator.

13. Arrangement according to Claim 11, <u>characterised in that</u> the plunger (46) controls the inlet valve (44) and the outlet valve (43) of a level control valve (41).

**Revendications**

1. Dispositif d'obtention d'un signal de charge de l'essieu moteur (9) à suspension mécanique élastique d'un groupe d'essieux constitué par l'essieu moteur (9) et par un essieu relevable (12) inactivable par application d'au moins une pression d'inactivation à au moins un élément (soufflet de levage 1) (12) à fluide de pression, <u>caractérisé par</u> un corps formateur de signal (29) qui peut être déplacé en rotation autour d'un axe de rotation (AA) fixe sur la superstructure (2) du véhicule, en fonction du déplacement d'un point (B) de l'essieu moteur (9), et peut être déplacé axialement, sensiblement le long de l'axe de rotation (AA), en fonction de la pression dans l'élément à fluide de pression (soufflet de levage 1), la surface périphérique (22) de ce corps formateur de signal présentant, pour chaque combinaison de position angulaire et position axiale du corps formateur de signal (29), une distance prédéterminée (x) par rapport à un point (C) de la superstructure (2) du véhicule, cela sensiblement transversalement à l'axe de rotation (AA).

2. Dispositif d'obtention d'un signal de charge de l'essieu moteur (9) à suspension mécanique élastique d'un groupe d'essieux constitué par l'essieu moteur (9) et par un essieu relevable (12) inactivable par application d'au moins une pression d'inactivation à au moins un élément (soufflet de levage 1) (12) à fluide de pression, <u>caractérisé par</u> un corps formateur de signal (29) qui, en fonction de la pression dans l'élément à fluide de pression (soufflet de levage 1) peut tourner autour d'un axe de rotation (AA) fixe sur la superstructure (2) du véhicule et qui, en fonction du déplacement d'un point (B) de l'essieu moteur (9), peut être déplacé axialement, sensiblement le long de l'axe de rotation (AA), la surface périphérique (22) de ce corps formateur de signal présentant, sensiblement transversalement à l'axe de rotation (AA), pour chaque combinaison de position angulaire et de position axiale du corps formateur de signal (29), une distance prédéterminée (x) par rapport à un point (C) de la superstructure (2) du véhicule.

3. Dispositif selon revendication 1, <u>caractérisé,</u> par le fait que le corps formateur de signal (29) présente en son côté frontal une surface de piston (21) par laquelle il borde une chambre de pression (20) reliée à l'élément à fluide de pression (soufflet de levage 1).

4. Dispositif selon revendication 3, <u>caractérisé</u> par le fait que le corps formateur de signal (29) est constitué par une pièce profilée (30) portant la surface périphérique (22) et par un piston (31) gui lui est lié au moins dans la direction de l'action de la pression dans la chambre de pression (20) et gui porte la surface de piston (21).

5. Dispositif selon l'une des revendications précédentes, <u>caractérisé</u> par le fait que le corps formateur de signal (29) est sollicité par un ressort de rappel (26) dans la direction opposée à la direction d'action de la pression dans l'élément à fluide de pression (soufflet de levage 1).

6. Dispositif selon l'une des revendications 1 ou 3 à 4, <u>caractérisé</u> par le fait que le corps formateur de signal (29) est sollicité dans la direction opposée à la direction d'action de la pression dans l'élément à fluide de pression (soufflet de levage 1) par une pression ne provenant pas dudit élément à fluide de pression (soufflet de levage 1).

7. Dispositif selon revendication 5, <u>caractérisé</u> par le fait que la précontrainte du ressort de rappel (26) est réglable.

8. Dispositif selon revendication 7, <u>caractérisé</u> par le fait que, pour le réglage de la précontrainte du ressort de rappel (26), un couvercle (27) servant à fournir au ressort de rappel (26) un appui côté enceinte peut être vissé dans l'enceinte (28), à une profondeur de vissage variable.

9. Dispositif selon l'une des revendications 3 à 8, <u>caractérisé</u> par le fait qu'un organe d'étranglement (32) est agencé dans la communication (conduite de fluide de pression 3) entre la chambre de pression (20) et l'élément à fluide de pression (soufflet de levage 1).

10. Dispositif selon l'une des revendications précédentes, <u>caractérisé</u> par le fait qu'un capteur électrique de déplacement ou distance (23), captant la distance (x) de la surface périphérique (22) du corps formateur de signal (29) au point (C) sur la superstructure (2) du véhicule, est agencé sur la superstructure (2) du véhicule.

11. Dispositif selon l'une des revendications précédentes, <u>caractérisé</u> par le fait qu'un poussoir (46), captant la distance (x) de la surface périphérique (22) du corps formateur de signal (29) au point (C) sur la superstructure (2) du véhicule, est guidé à coulissement axial sur la superstructure (2) du véhicule.

12. Dispositif selon revendication 11, <u>caractérisé</u> par le fait que le poussoir commande la soupape de réglage d'un régulateur de force de freinage en fonction de la charge.

13. Dispositif selon revendication 11, <u>caractérisé</u> par le fait que le poussoir (46) commande la soupape d'admission (44) et la soupape de décharge (43) d'une soupape de régulation de niveau (41).

FIG. 1

FIG. 2

FIG. 3

FIG.4

FIG.5